# EUROPÄISCHE PATENTSCHRIFT

(11) **EP 1 949 027 B1**
(45) Veröffentlichungstag und Bekanntmachung des Hinweises auf die Patenterteilung: **11.03.2015**
(21) Anmeldenummer: 06818057.9
(22) Anmeldetag: 08.11.2006
(51) Int. Cl.: G01B 11/25, G01B 21/20

(54) **OPTISCHE VERSMESSUNG METALLISCHER OBERFLÄCHEN**
OPTICAL MEASUREMENT OF METALLIC SURFACES
MESURE OPTIQUE DE SURFACES METALLIQUES

(30) Priorität: 15.11.2005 DE 102005054373
(43) Veröffentlichungstag der Anmeldung: 30.07.2008
(73) Patentinhaber: MTU Aero Engines AG, 80995 München (DE)
(72) Erfinder: GROSSKURTH, Benjamin, 80469 Müchen (DE); SATZGER, Wilhelm, 80804 München (DE)
(86) Internationale Anmeldenummer: PCT/DE2006/001955
(87) Internationale Veröffentlichungsnummer: WO 2007/056974

(56) Entgegenhaltungen:
- WO-A-02/066924
- DE-A1- 10 230 494
- GB-A- 2 295 890
- US-A- 5 386 292
- US-A1- 2003 234 941

## Beschreibung

Die vorliegende Erfindung betrifft ein Verfahren zur optischen Vermessung einer Oberfläche, welche insbesondere ein sphärische Form mit einer hohen Strahlungsreflexion aufweist, und mit wenigstens einer Strahlungsquelle sowie mittels mindestens einer Strukturlichtquelle beleuchtet wird, um eine Beleuchtungsstruktur auf der zu vermessenden Oberfläche hervorzurufen und unter Verwendung einer Kamera die Beleuchtungsstruktur aufgenommen wird, wobei vor der Vermessung der Oberfläche auf diese eine Beschichtung aufgebracht wird, um die Strahlungsreflexion zu reduzieren.

Bei vielen dreidimensionalen optischen Messverfahren von Freiformflächen wird das Messobjekt strukturiert beleuchtet. Die Messobjekte können dabei zylindrische oder sphärische und damit sehr komplexe und verwinkelte Oberflächen aufweisen, wie diese insbesondere bei Triebwerksschaufeln oder BLISKs vorkommen. BLISKs bezeichnen sogenannte Blade- Disks, wie sie beispielsweise als Verdichterstufen in Strahltriebwerken auftreten. Die dreidimensionale optische Vermessung der Oberflächen kann einerseits zur Kontrolle von Maßgenauigkeiten dienen als auch zur Generierung von Datensätzen für die Schaffung von elektronischen Volumenmodellen von vorhandenen Messobjekten herangezogen werden. Die strukturierte Beleuchtung der Messobjekte umfasst Streifenstrukturen, Punkte oder stochastische Muster, wobei das von der Oberfläche zurückgestreute Licht von einer Kamera erfasst wird.

Aus der DE 195 36 294 C2 ist ein Verfahren zur geometrischen Navigation von optischen 3D-Sensoren zum dreidimensionalen Vermessen von Objekten bekannt. Dieses Verfahren beruht auf den Prinzipien der Streifenprojektion und der Triangulation unter Verwendung wenigstens einer Kamera, vorzugsweise einer Videokamera, einer Einrichtung zur Digitalisierung und Speicherung von Bildfolgen der Kamera, mindestens einem relativ zur Kamera fixierten bzw. mehreren Kameras zugeordneten Beleuchtungsprojektor, der zeitlich nacheinander Lichtstrukturen aus wenigstens eindimensionalen Streifen erzeugt, mindestens einer im Referenzkoordinationssystem bestimmten Navigationseinrichtung, die entweder aus reflektierenden und /oder streuenden Signalmarken mit einer Beleuchtungseinrichtung oder aus einem Signalkontinuum besteht, welche mit Identifikationsindices indiziert sind. Ein derartiges Verfahren, bei dem mittels Lichtstrukturen die zu vermessende Oberfläche des Messobjektes beleuchtet wird, setzt eine Oberfläche voraus, welche nicht oder nur in geringem Maße eine spiegelnde Eigenschaft aufweist. Die spiegelnde Eigenschaft beschreibt insbesondere eine hohe Reflexion, wie sie bei metallischen Oberflächen in Erscheinung tritt. Für eine zuverlässige Durchführung des genannten Verfahrens ist jedoch erforderlich, dass die Oberfläche eine matte, diffus streuende Reflexionseigenschaft aufweist. Daher wird die Oberfläche des zu vermessenden Messobjektes mit einer Beschichtung überzogen, welche die optischen Eigenschaften der Oberfläche auf die oben genannte Weise verändert. Der Auftrag der Beschichtung erfolgt hauptsächlich mit Spraytechniken (Airbrush), wobei der aufgetragene Werkstoff ein weiße, diffus streuende Schicht auf der Oberfläche des Messobjektes bildet. Diese Schicht kann beispielsweise Titandioxid umfassen, da dieses Material die gewünschten Eigenschaften ausbildet.

Bei dem bekannten Verfahren tritt das Problem auf, dass die Beschichtung der Oberfläche das Messergebnis der optischen Vermessung von Freiformflächen nicht negativ beeinflussen darf. Die Schicht muss somit möglichst dünn und gleichmäßig auf der Oberfläche aufliegen und muss überdies ohne Schwierigkeiten wieder entfernbar sein. Bei einer variierenden Schichtdicke ergibt sich eine Verfälschung des Messergebnisses, wobei mittels der Spraytechnik ein gleichmäßiger Auftrag des Beschichtungsmaterials insofern nicht möglich ist, als bei komplexen Oberflächenstrukturen wie beispielsweise Triebwerksschaufeln in den innenliegenden Bereichen oder in Vertiefungen gelegene Oberflächen durch das Beschichtungsmaterial weniger stark benetzt werden. Außen liegende Oberflächen wie beispielsweise obere Enden von Triebwerksschaufeln weisen hingegen eine größere Schichtdicke auf, da sich das Beschichtungsmaterial in diesen Bereichen stärker auf der Oberfläche niederschlägt. Um unter Verwendung einer Spraytechnik gemäß dem Stand der Technik eine geschlossene und gleichmäßige Beschichtung der gesamten Oberfläche zu ermöglichen, ist es zudem erforderlich, eine Schichtdicke zu erzeugen, welche zumindest stellenweise einen Wert von 0,01 mm überschreitet. Dabei ist eine exakte Vermessung des Messobjektes aufgrund der großen Schichtdicke nicht mehr möglich, so dass dies zu Messfehlern und damit zur Generierung falscher Datensätze führt.

Es ist daher die Aufgabe der vorliegenden Erfindung, ein Verfahren zur optischen Vermessung einer Oberfläche mit einer Beschichtung zu schaffen, bei dem die Beschichtung gleichmäßig auf der gesamten Oberfläche des Messobjektes aufgebracht wird und eine Dicke von weniger als 0,01 mm aufweist.

Diese Aufgabe wird ausgehend von einem Verfahren zur optischen Vermessung einer Oberfläche mit einer Oberflächenbeschichtung gemäß Anspruch 1 gelöst. Vorteilhafte Weiterbildungen der Erfindung sind in den abhängigen Ansprüchen angegeben. Die Erfindung schließt die technische Lehre ein, dass die Beschichtung der sphärischen Oberfläche mittels des Prinzips des elektrostatischen Beschichtens aufgebracht wird. Mittels dieses Verfahrens ist es möglich, eine dünne und gleichmäßige Beschichtung auf der Oberfläche des Messobjektes zu schaffen. Das Beschichtungsmaterial kann dabei in Pulverform vorliegen und tritt aus einer Sprüheinheit aus. Zwischen der Sprüheinheit und dem zu beschichtenden Messobjekt wird ein Kraftfeld mit Hilfe einer Gleichspannung geschaffen, indem der Sprühkopf gegenüber dem Messobjekt elektrisch gegenpolig geladen wird. Die aus der Sprüheinheit ausgesprühten feinen Pulverpartikel werden im elektrischen Feld vom Messobjekt angezogen, wobei diese dabei den Kraftfeldlinien folgen und sich auf der Oberfläche des Messobjektes niederschlagen. Da das elektrische Kraftfeld das zu beschichtende Messobjekt vollständig umschließt, wird dieses aufgrund der Coulomb'schen Krafteinwirkung auf die Pulverpartikel gleichmäßig auf der Oberfläche des Messobjektes niedergeschlagen. Somit kann sich eine gleichmäßige Beschichtung auf der Oberfläche des Messobjektes ausbilden, wobei diese im Wesentlichen keine Dickenunterschiede beispielsweise zwischen den vorstehenden Oberflächen und weniger zugänglichen Oberflächen aufweisen. Die Aufladung des Pulvermaterials erfolgt in der Regel durch eine hochspannungsführende Koronaaufladung oder durch eine Triboaufladung. Bei der Koronaaufladung wird ein elektrostatisches Feld mit Luftionen ausgebildet, wobei bei der Trobiaufladung eine Reibung der Pulverpartikel in einem Strömungskanal in der Sprüheinheit hervorgerufen wird. Bei der reinen Koronaaufladung liegt zwischen einer an der Hochspannung (0-100 kV) angeschlossenen Elektrode an der Sprüheinheit und dem geerdeten Messobjekt ein elektrisches Feld an. Um die Sprüheinheit herum bilden sich Luftionen, die die Pulverpartikel aufladen. Bei der reinen Triboaufladung werden die Pulverpartikel in der Regel bei der Durchströmung eines in der Sprüheinheit befindlichen Rohrkanals durch Berührung aufgeladen, wobei je nach Reibmaterial positive oder negative Polung am Pulvermaterial anliegt. Das Pulvermaterial kann dabei zuerst triboelektrisch aufgeladen und anschließend durch eine Koronaentladung auf entgegengesetzte Ladung umgeladen werden. Somit kann eine gleichmäßige Beschichtung auf dem Messobjekt erzielt werden, da es zu einer verbesserten Verteilung führt. Weiterhin bietet das Prinzip des elektrostatischen Beschichtens den Vorteil einer geringeren Spritznebelbildung (Overspray), wodurch der Verlust an Beschichtungsmaterial minimiert werden kann.

Vorteilhafterweise wird als Oberflächenbeschichtung eine weiß- und/oder diffusstreuende Schicht aufgebracht. Mittels dieser optischen Eigenschaft trifft das von der Lichtquelle erzeugte Licht bzw. die Lichtstrukturen ohne Reflexionen oder Spiegelungen in die Videokamera, um von dieser detektiert zu werden. Durch eine weiße Oberflächenbeschichtung kann insbesondere die Lichtstruktur, welche von den den Kameras zugeordneten Beleuchtungsprojektoren auf der Oberfläche des Messobjektes abgebildet werden, besser von den Kameras detektiert werden, so dass sich eine weiße Oberfläche als besonders vorteilhaft erweist. Die diffuse Streueigenschaft der Oberflächenbeschichtung vermeidet zudem unerwünschte Spiegel- oder Reflexionseffekte, welche das von der Kamera aufgenommene Bild entweder verfälscht oder das Messobjekt unvollständig wiedergibt.

Gemäß eines bevorzugten Ausführungsbeispiels wird die Oberflächenbeschichtung als pulverförmiger Werkstoff aufgebracht. Dabei weist der Werkstoff eine pulverförmige Konsistenz auf, um an die Sprüheinheit herangeführt zu werden, und von dieser versprüht zu werden und diese anschließend auf die Oberfläche des Messobjektes aufzubringen. Zur Haftung des pulverförmigen Werkstoffs kann dieser chemisch oder mechanisch an die Oberfläche des Messobjektes gebunden werden. Die Größe der Pulverteilchen kann dabei bis in den unteren Nanobereich hineinreichen, um die entsprechenden optischen Eigenschaften zu erzielen. Der Werkstoff kann dabei ein Titandioxid umfassen, was auf der Oberfläche eine Weißpigmentierung erzeugt. Die Teilchengröße des Pulverwerkstoffs kann dabei so gewählt werden, dass die für die optische Vermessung der Metalloberfläche erforderliche diffus streuende Eigenschaft entsteht. Titandioxid bildet für industrielle Anwendungen ein bedeutendes Pigment, wobei das strahlende Weiß durch eine vollständige Streuung des Lichts an den Pigmentteilchen verursacht wird. Zudem ist der Brechungsindex der Pigmentkristalle des Titandioxids in Verbindung mit einem anderen Medium so günstig, dass die weiße Farbe des Titandioxids beim Vermischen mit Wasser oder einem anderen Bindemittel nicht ermattet. Ein weiterer Vorteil von Titandioxid ist die vollständige Ungiftigkeit, so dass für einen Bediener keine aufwendigen Vorkehrungen getroffen werden müssen.

Gemäß einer weiteren Ausführungsform der Erfindung wird vorgeschlagen, dass der pulverförmige Werkstoff zum elektrostatischen Beschichten mittels Druckluft auf die Oberfläche aufgebracht wird. Die Druckluft bewirkt eine Zerstäubung des Beschichtungswerkstoffes und befördert diesen aus der Düsenöffnung der Sprüheinheit. Der Druckbereich der Druckluft kann dabei zwischen beispielsweise 2-8 bar liegen, wobei auch höhere Drücke mit entsprechend geringere Strömungsquerschnitten einsetzbar sind. Die Zerstäubung des Beschichtungswerkstoffes kann dabei durch die Druckluft erzeugt werden, wobei jedoch auch eine reine elektrostatische Zerstäubung anwendbar ist. Nach dem Verlassen des Beschichtungswerkstoffes aus der Düse bewirkt das elektromagnetische Kraftfeld eine Bewegung des Beschichtungswerkstoffs auf das Messobjekt, so dass sich diese auf der Oberfläche des Messobjektes niederschlägt.

Gemäß eines weiteren Ausführungsbeispiels der vorliegenden Erfindung wird vorgeschlagen, dass der pulverförmige Werkstoff zum elektrostatischen Beschichten mittels eines Trägermaterials auf die Oberfläche aufgebracht wird. Dieses als Alternative zum Druckluftverfahren anwendbare Verfahren des elektrostatischen Beschichtens mittels eines Trägermaterials ist der Beschichtungswerkstoff im Trägermaterial gelöst und wird gemeinsam mit diesem auf der Oberfläche des Messobjektes niedergeschlagen. Anschließend kann durch eine Verdunstung das Messobjekt trocknen, wobei das Titandioxid als gleichmäßige Oberflächebeschichtung zurückbleibt. Das Trägermaterial kann dabei eine Mischung aus Wasser und Ethanol aufweisen, wobei Wasser mit Ethanol unbegrenzt mischbar ist. Somit kann eine optimale Beschaffenheit des Trägermaterials gewählt werden, um eine möglichst gleichmäßige Beschichtung des Messobjektes bei gleichzeitig schneller Trocknung der Oberflächenbeschichtung zu ermöglichen.

Vorteilhafterweise weist die elektrostatische Beschichtungseinrichtung eine Sprüheinheit auf, aus welcher der Werkstoff der Beschichtung austritt, wobei zwischen der Sprüheinheit und dem Messobjekt eine Hochspannung anliegt. Die Hochspannung ist dabei eine Gleichspannung, wobei die Sprühpistole bzw. die Sprüheinheit eine negative Ladung aufweisen kann, wohingegen das Messobjekt eine positive Ladung enthält. Die Hochspannung wird dabei mittels eines Hochspannungsgenerators erzeugt, und kann Werte zwischen beispielsweise 40kV bis 150kV und vorzugsweise zwischen 80-100 kV annehmen. In Abhängigkeit von der Distanz zwischen der Sprüheinheit und dem Messobjekt kann die Hochspannung jedoch auch geringere oder höhere Werte annehmen, wobei geringere Werte bei einer niedrigeren Distanz und höhere Werte bei einer größeren Distanz zum Messobjekt erforderlich sind.

Um eine möglichst gleichmäßige Beschichtung der Oberflächen des Messobjektes zu erzielen, kann vorgesehen sein, dass das zu beschichtende Messobjekt relativ zur Sprüheinheit bewegbar ist, wobei die relative Bewegung zwischen Messobjekt und der Sprüheinheit auch durch eine Bewegung der Sprüheinheit im Raum erzielbar ist.

Damit kann auf besonders vorteilhafte Weise das Verfahren des elektrostatischen Beschichtens genutzt werden, so dass die Ausrichtung des elektromagnetischen Kraftflusses relativ zur beschichtenden Messobjektes nicht ortsfest ist, sondern durch eine Bewegung des Messobjektes relativ zur Sprüheinheit eine gleichmäßige und richtungsunabhängige Ausrichtung des Kraftflusses des Magnetfeldes erzielbar ist.

Gemäß einer vorteilhaften Dicke der Beschichtung der Oberfläche des Messobjektes kann diese einen Wert von 0,01 mm aufweisen, wobei auch geringere Dicken möglich sind. Bei einer Beschichtung mit einem Titandioxid-Werkstoff kann die Dicke der Beschichtung bis in den unteren Mikrometerbereich oder sogar Nanometerbereich reichen, wobei die Dicke der Beschichtung ebenfalls von der Oberflächenqualität des Messobjektes abhängt. Bei einer hohen Oberflächenqualität des Messobjektes ist eine geringere Dicke der Beschichtung hinreichend, wohingegen bei einer niedrigeren Oberflächenqualität eine größere Beschichtungsdicke erforderlich ist. Als eine optimale Schichtdicke kann jedoch ein unterer Mikrometerbereich angenommen werden.

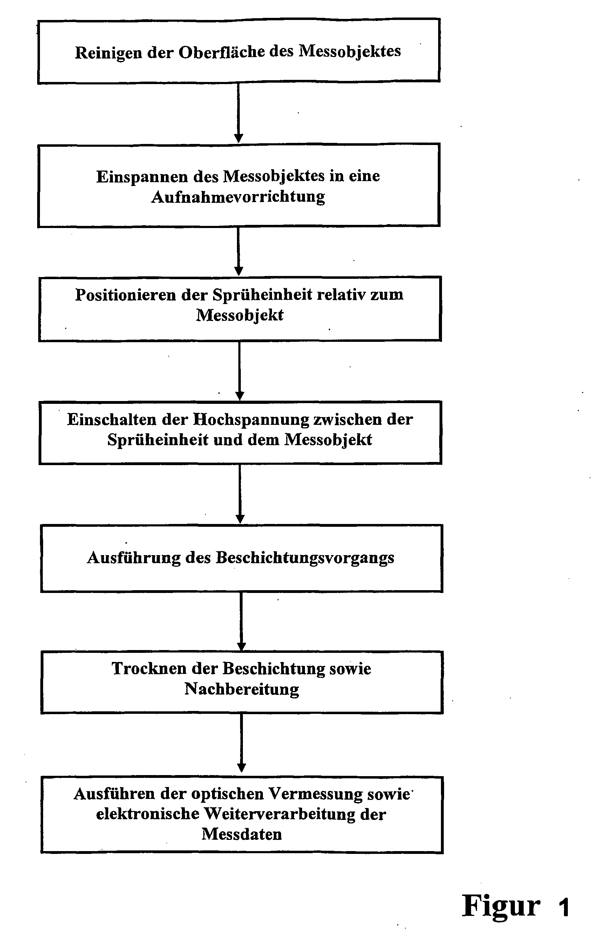

Weitere die Erfindung verbessernde Maßnahmen sind in den Unteransprüchen angegeben oder werden nachstehend gemeinsam mit der Beschreibung eines bevorzugten Ausführungsbeispiels der vorliegenden Erfindung anhand der einzigen Figur näher dargestellt. Es zeigt:
- Figur: Ablaufdiagramm zum elektrostatischen Beschichten von Messobjekten mit anschließender Durchführung einer Messung.

Das in der Figur dargestellte Ablaufdiagramm zum elektrostatischen Beschichten von Messobjekten mit einer anschließenden Durchführung der Messung ist in sieben Schritten beschrieben, was keine Beschränkung des Schutzumfanges des Verfahrens auf die hierin genannten Verfahrensschritte bedeutet.

Der erste Schritt des erfindungsgemäßen Verfahrens umfasst das Reinigen der Oberfläche des Messobjektes, so dass dieses frei von Fremdkörpern und Oberflächenverunreinigungen ist. Somit kann einer fehlerhaften Messung sowie einer möglicherweise fehlenden Haftung einer nachfolgenden Oberflächenbeschichtung vorgebeugt werden. In einem weiteren Schritt erfolgt das Einspannen des Messobjektes in eine Aufnahmevorrichtung. Die Aufnahmevorrichtung kann dabei eine Drehvorrichtung bzw. Schwenkvorrichtung sein, welche das Messobjekt relativ zur Sprüheinheit dreht bzw. schwenkt. Dabei erfolgt die Einspannung des Messobjektes vorzugsweise über Oberflächenstellen, welche nicht von den optischen Messaufnehmern erfasst werden bzw. welche keine besondere Relevanz hinsichtlich des Messdatensatzes aufweisen. Der Grund hierfür liegt insbesondere darin, dass die Beschichtung der Oberfläche an den Aufnahmestellen des Messobjektes durch die Aufnahmevorrichtung nicht erfolgen kann, da sich an den Stellen kein Beschichtungswerkstoff niederschlagen kann.

Das Positionieren der Sprüheinheit relativ zum Messobjekt erfolgt in einem weiteren Verfahrensschritt, wobei diese insbesondere die Ausrichtung des Sprühkopfes und die Festlegung des Sprühabstandes umfasst. Nachfolgend erfolgt ein Einschalten der Hochspannung zwischen der Sprüheinheit und dem Messobjekt. Die Zuleitung der Hochspannung wird vorzugsweise über die Aufnahmevorrichtung mit dem Messobjekt kontaktiert. Nach dem Einschalten bzw. Anlegen der Hochspannung am Messobjekt erfolgt die Ausführung des Beschichtungsvorgangs. Dabei wird entweder über eine Druckluft oder über ein Trägermaterial der Beschichtungswerkstoff zur Sprüheinheit geleitet bzw. aus dem Sprühkopf ausgeblasen. Durch das elektrische Kraftfeld, welches durch die elektrostatische Aufladung des Messobjektes gegenüber dem Sprühkopf erzeugt wird, bewegt sich nun der zerstäubte Beschichtungswerkstoff in die Richtung des Messobjekts, wobei sich der Beschichtungswerkstoff auf der Oberfläche des Messobjektes niederschlägt. Anschließend erfolgt ein Trocknen der Beschichtung sowie eine entsprechende Nachbearbeitung. Insbesondere wenn der Beschichtungswerkstoff, wie beispielsweise Titandioxid, mittels eines Trägermaterials wie einer Mischung aus Wasser und Ethanol auf das Messobjekt aufgetragen wurde, ist eine Trockenzeit erforderlich, innerhalb welcher das Trägermaterial von der Oberfläche des Messobjektes verdunstet.

In einem letzten Verfahrensschritt erfolgt das Ausführen der optischen Vermessung sowie die elektronische Weiterverarbeitung der Messdaten. Die dreidimensionale Vermessung des Messobjektes erfolgt dabei innerhalb eines Navigationsvolumens relativ zu einem Referenzkoordinatensystem, wobei die Aufnahme des Messobjektes über das Prinzip der Steifenprojektion und der Triangulation unter Verwendung einer entsprechenden Kamera erfolgt. Nachfolgend wird in einer Einrichtung zur Digitalisierung und Speicherung von Bildfolgen das Bild aus der Kamera ausgewertet und gespeichert, wobei aus dem erzeugten Datensatz ein Oberflächen- bzw. ein Volumenmodell generierbar ist, welches durch eine sehr hohe Genauigkeit mit Werten im unteren Mikrometerbereich gekennzeichnet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur optischen Vermessung einer Oberfläche, welche insbesondere eine sphärische Form mit einer hohen Strahlungsreflexion aufweist und mit wenigstens einer Strahlungsquelle sowie mittels mindestens einer Strukturlichtquelle beleuchtet wird, um eine Beleuchtungsstruktur auf der zu vermessenden Oberfläche hervorzurufen und unter Verwendung einer Kamera die Beleuchtungsstruktur aufgenommen wird, wobei vor der Vermessung der Oberfläche auf diese eine Beschichtung aufgebracht wird, um die Strahlungsreflexion zu reduzieren,
**dadurch gekennzeichnet, dass** die Beschichtung der sphärischen Oberfläche mittels des Prinzips des elektrostatischen Beschichtens aufgebracht wird.

2. Verfahren nach Anspruch 1,
**dadurch gekennzeichnet, dass** als Oberflächenbeschichtung eine weiß und /oder diffus streuende Schicht aufgebracht wird.

3. Verfahren nach Anspruch 1 und 2,
**dadurch gekennzeichnet, dass** die Oberflächenbeschichtung als pulverförmiger Werkstoff aufgebracht wird.

4. Verfahren nach einem der vorgenannten Ansprüche,
**dadurch gekennzeichnet, dass** als Beschichtung ein Titandioxid aufgebracht wird.

5. Verfahren nach einem der vorgenannten Ansprüche,
**dadurch gekennzeichnet, dass** der pulverförmige Werkstoff zum elektrostatischen Beschichten mittels Druckluft auf die Oberfläche aufgebracht wird.

6. Verfahren nach einem der vorgenannten Ansprüche,
**dadurch gekennzeichnet, dass** der pulverförmige Werkstoff zum elektrostatischen Beschichten mittels eines Trägermaterials auf die Oberfläche aufgebracht wird.

7. Verfahren nach Anspruch 6,
**dadurch gekennzeichnet, dass** das Trägermaterial eine Mischung aus Wasser und Ethanol aufweist.

## Claims

1. A method for optically measuring a surface which has in particular a spherical form with a high reflection of radiation and is illuminated with at least one radiation source and also by means of at least one structured light source in order to bring about a lighting structure on the surface that is to be measured, and the lighting structure is recorded with the use of a camera, wherein before measuring the surface a coating is applied to it in order to reduce the reflection of radiation,
**characterised in that** the coating of the spherical surface is applied by means of the principle of electrostatic coating.

2. A method according to claim 1,
**characterised in that** a white and/or diffusely scattering layer is applied as the surface-coating.

3. A method according to claim 1 and 2,
**characterised in that** the surface-coating is applied as a pulverulent material.

4. A method according to one of the afore-mentioned claims,
**characterised in that** a titanium dioxide is applied as the coating.

5. A method according to one of the afore-mentioned claims,
**characterised in that** the pulverulent material for the electrostatic coating is applied to the surface by means of compressed air.

6. A method according to one of the afore-mentioned claims,
**characterised in that** the pulverulent material for the electrostatic coating is applied to the surface by means of a carrier material.

7. A method according to claim 6,
**characterised in that** the carrier material has a mixture of water and ethanol.

## Revendications

1. Procédé pour la mesure optique d'une surface qui a, en particulier, une forme sphérique avec un important réfléchissement du rayonnement et qui est éclairée avec au moins une source de rayonnement ainsi qu'au moyen d'au moins une source de lumière structurée pour provoquer une structure d'éclairage sur la surface à mesurer et enregistrer la structure d'éclairage avec une caméra, un revêtement étant appliqué sur la surface avant de mesurer celle-ci afin de réduire le réfléchissement du rayonnement,
**caractérisé en ce que**
le revêtement de la surface sphérique est appliqué selon le principe de revêtement électrostatique.

2. Procédé selon la revendication 1,
**caractérisé en ce que**
le revêtement de surface appliqué est une couche à dispersion blanche et/ou diffuse.

3. Procédé selon la revendication 1 ou la revendication 2,
**caractérisé en ce que**
le revêtement de surface appliqué est une matière pulvérulente.

4. Procédé selon l'une quelconque des revendications précédentes,
**caractérisé en ce que**
le revêtement appliqué est un oxyde de titane

5. Procédé selon l'une quelconque des revendications précédentes,
**caractérisé en ce que**
la matière pulvérulente destinée au revêtement électrostatique est appliquée sur la surface avec de l'air comprimé.

6. Procédé selon l'une quelconque des revendications précédentes,
**caractérisé en ce que**
la matière pulvérulente destinée au revêtement électrostatique est appliquée sur la surface avec une matière support.

7. Procédé selon la revendication 6,
**caractérisé en ce que**
la matière support présente un mélange d'eau et d'éthanol.
